# EUROPEAN PATENT APPLICATION

(11) **EP 2 854 336 A1**
(43) Date of publication of application: **01.04.2015**
(21) Application number: 13306338.8
(22) Date of filing: 27.09.2013
(51) Int. Cl.: H04L 12/24, H04W 24/04

(54) **Management method for use by a management system**

(71) Applicant: ALCATEL LUCENT, 92100 Boulogne-Billancourt (FR)
(72) Inventor: Gacanin, Haris, 2018 Antwerpen (BE); Bose, Arabinda, Austin, TX Texas 78759-2247 (US)
(74) Representative: ALU Antw Patent Attorneys

(57) **Abstract**

A management system in a telecommunication environment comprising a femto access network and a radio access network is described. The management system comprises
- a first collector adapted to collect femto layer performance monitoring data that comprises values for femto layer management parameters of the femto access network; and
- a second collector adapted to collect radio access layer performance monitoring data that comprises values for radio access layer management parameters of the radio access network.

The management system further comprises an analytics diagnostic engine with decision logic for predefined normalized management parameters. Each one of the predefined normalized management parameters is defined in relation to at least one of the femto layer management parameters and at least one of the radio access layer management parameters. The analytics diagnostic engine is adapted to receive the collected femto layer performance monitoring data and the radio access layer performance monitoring data, and is further adapted to generate action signals for managing network elements of both, the femto access network and the radio access network. (Figure 2).

## Description

### Field of the Invention

The present invention relates to a management method for use by a management system in a telecommunication environment. Such management system and method are already know in the art.

### Background

Indeed, such a management system is for instance know in Self Organizing Networks SON's which are becoming a crucial factor for any telecom operator to reduce their rollout time and optimize the real-time performance of their networks.

A self-organizing Network SON is an automation technology designed to make the planning, configuration, management, optimization and healing of mobile radio access networks simpler and faster. SON functionality and behavior has been defined and specified in generally accepted mobile industry recommendations produced by organizations such as 3rd Generation Partnership Project 3GPP and the Next Generation Mobile Networks NGMN.

The explosive growth in mobile data and voice traffic has put significant load on the operator's existing Radio Access Network RAN infrastructures. The quality of service and the quality of experience of the subscribers are the key criteria for operators to hold on to their end customers and reduce churn. Newly added base stations should be self-configured in line with a "plug-and-play" paradigm, while all operational base stations will regularly self-optimize parameters and algorithmic behavior in response to observed network performance and radio conditions. Furthermore, self-healing mechanisms can be triggered to temporarily compensate for a detected equipment outage, while awaiting a more permanent solution.

Studies on wireless usage show that more than 50% of all voice calls and more than 70% of all data usages originate from subscriber's home. The in-building coverage for many subscribers' calls are not good causing call drops and bad customer experience. In addition data hungry applications require more bandwidth that is unachievable in the traditional way wireless networks have been designed. In order to be competitive operators have to reduce their

Operating Expenditures OPEX by reducing cost per bit of mobile data. As a result operators have flattened their network architecture as per 3GPP recommendations. Operators have introduced E-UTRAN Node B, also known as Evolved Node B, abbreviated as eNodeB (as called here further on) and Home Node B, or HNB, or Femto Access Point FAP (as called here after).

An eNodeB is the element in E-UTRA of LTE WHICH is the evolution of the element Node B in UTRA of UMTS. It is the hardware that is connected to the mobile phone network that communicates directly with mobile handsets (User Equipment). Traditionally, a Node B has minimum functionality, and is controlled by a Radio Network Controller RNC. However, with an eNodeB, there is no separate controller element which simplifies the architecture and allows lower response times.

A Femto Access Point is a 3G femtocell which performs many of the functions of a Node B, but which is optimized for deployment in the home. Such a Femto Access Point is typically coupled via a Routing Gateway, either integrated or not, in the home network to the Broadband Service Network.

ENodeB's are introduced in the macro cellular radio networks and Femto Access Points are introduced e.g. in the subscriber's home network in order to offload from the Radio Access Network data traffic. Hereby call drops and call handovers failures are reduced and a faster response time is generated.

In this evolved network architecture we distinguish two network layers 1) Femto layer and 2) 3G/4G LTE Radio Access Network (RAN) layer.

Femtocell Device Management Systems are existing in order to provide complete end-to-end service management including enriched customer experience. A femtocell management system, located in the operator's network, plays a critical role in the provisioning, activation and operational management of femtocells using industry standards such as TR-069 protocol family that is defined by Broadband Forum (BBF) and TR196 Femto Access Point capability defined by the Small Cell Forum. Various standards bodies specify the use of the TR-069 family of standards as the base device management framework for femtocells. This protocol is widely used in DSL modem and residential gateway deployments, and uses a proven web-based architecture that can scale to support millions of devices. TR-069-based femtocell management systems are supporting efficient management of large numbers of femtocells and are providing self configuration, self optimization and self healing of the home network elements improving customer experience reducing churn, reducing unnecessary return of devices, reducing technician visit to fix a network element or device problem and enabling proactive care.

A problem of such prior art management systems is that these solutions focus on 3G/4G LTE RAN Layer management directed to the eNodeBs with e.g. Self Organizing Networks only or alternatively they focus on Femto Layer management directed to the Femto Access Points/Routing Gateways only with e.g. a Femto Device Management System.

### Summary

An object of the present invention is to provide a management method for use by a management system such as the above known types but wherein the provided focus is on both layers i.e. on the 3G/4G LTE RAN layer and as well on the Femto Layer.

The solution of the present application integrates home device management via TR-196 with radio access network RAN with respect to 3G and 4G networks. Such a management system supports operational functions such as service/device activation and firmware manipulation with access to the RAN layer and to the Femto layer and with advance mechanisms to deal with interference management, load balancing, admission control, etc.

According to the invention, this object is achieved due to the fact that the management method for use by the management system in a telecommunication environment that comprises a femto access network and a radio access network comprises the steps of :
- collecting by a first collector femto layer performance monitoring data that comprising values for femto layer management parameters of the femto access network; and
- collecting by a second collector radio access layer performance monitoring data (RD) comprising values for radio access layer management parameters of the radio access network and furthermore the method comprises
- predefining normalized management parameters each one in relation to at least one of the femto layer management parameters and at least one of the radio access layer management parameters; and
- predefining an analytics diagnostic engine with decision logic for the normalized management parameters, and
- applying both collected femto layer performance monitoring data and radio access layer performance monitoring data to the diagnostic engine and thereby generating action signals for managing network elements of both networks i.e. the femto access network and the radio access network.

In this way a management engine is developed for a multi-layer Femto/RAN network troubleshooting and diagnostics. This is realized by defining the normalized management parameters in function of both i.e. the existing femto layer management parameters and the existing radio access layer management parameters. Hereby the analytics diagnostic engine is enabled to discover and communicate the meaningful patterns in the collected data of both layers.

Another characteristic feature of the present invention is that the action signals being as such for managing the network elements of both i.e. the femto access network and the radio access network in relation to each other. In this way a common goal on the level of both layers can be realized by means of transmission of one or more of the generated action signals. Indeed, according to prior art, the independent known management servers are acting according to its own installed algorithms and are serving thereby its own defined goals. However, the different goals reflected in action signals being generated by the different management servers might have opposite effects on the network elements. By generating action signals for the network elements which are based upon the predefined normalized parameters taking as well femto layer management parameters as radio access layer management parameters into account, a common defined goal of the analytics diagnostic engine is aimed and served whereby contradicting commands are avoided.

A further feature is that the action signals for the network elements of either or both the femto access network and the radio access network, comprises anyone of configuration management signals, performance management signals and fault management signals.

Another feature of the system management method is that the method comprises storing the collected femto layer performance monitoring data and radio access layer performance monitoring data at a storage platform before the respective step of applying the data to the diagnostic engine.

The system management method according to the present application further comprises that the normalized management parameters are anyone of a power requirement parameter, a High Speed Downlink Packet Access system description parameter or a system resource availability parameter. These examples of normalized management parameters are described in more details in the detailed description.

Furthermore the functional blocks of the management system i.e. the first collector, the second collector, the analytics diagnostic engine and the storage platform can be located centralized but can as well be located in a distributed way in the telecommunication network.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

### Brief Description of the Figures

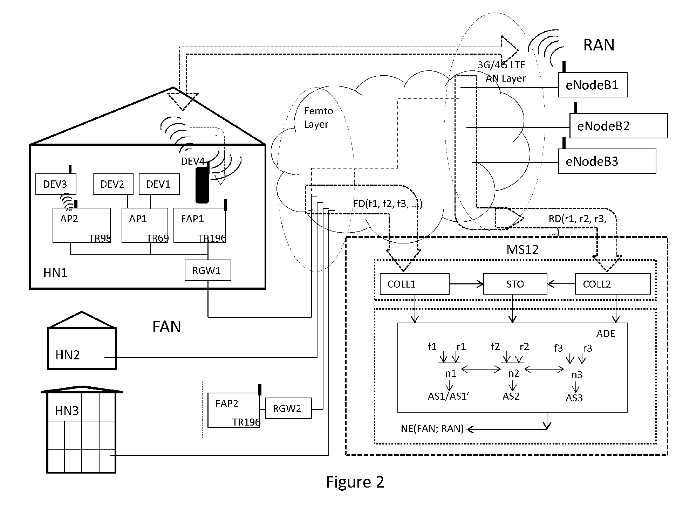

The working of the management system according to the present invention in accordance with its telecommunication environment that is shown in Figure 2 will be explained by means of a functional description of the different blocks shown therein. Based on this description, the practical implementation of the blocks will be obvious to a person skilled in the art and will therefore not be described in details. In addition, the principle working of the management method will be described in further detail.

Some embodiments of apparatus and/or methods in accordance with embodiments of the present invention are now described, by way of example only, and with reference to the accompanying drawings, in which:
Figure 1 provides an overview of an exemplary telecommunication environment according to prior art; and
Figure 2 provides an overview of an exemplary telecommunication environment in which the invention might be applied.

### Description of Embodiments

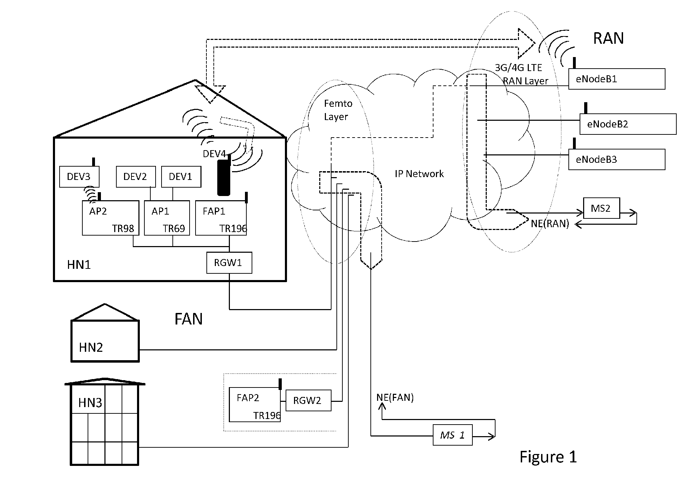

Referring to Figure 1 a telecommunication environment is shown. A list of the following network elements is described here below :

In a Radio Access Network RAN the 3G/4G LTE RAN Layer is shown which comprises :
- 3 Evolved NodeB's : eNodeB1, eNODEB2, eNodeB3 : each eNodeB's is adapted to communicate via an radio interface with mobile customer equipment such as e.g. DEV4 and to communicate with the Internet Protocol Network IP Network (shown in figures as a cloud).
- 1 Management Server MS2 such as e.g. a Self Organizing Network SON which is also adapted to communicated with the IP Network. The Management Server MS2 is adapted to collect radio access layer performance monitoring data from the radio access network e.g. from the traffic regarding eNodeB1, eNodeB2, eNodeB3. This can for instance be realized by filtering from the traffic in the radio access the management signals or by executing measurements on the traffic in the radio access network.
   As explained above, such an management system is enabled to make the planning, configuration, management, optimization and healing of the mobile radio access network RAN simpler and faster.
   In a Femto Access Network FAN the Femto Layer is shown which comprises :
- 3 Home Networks i.e. Home Locations HN1, HN2, HN3 : each Home Network is adapted to communicate with the IP Network over a wireline communication line via a Router Gateway RGW1.
- 1 public Femto Access Point Femto FAP2 is shown which enables communication with the IP Network via Router Gateway RGW2. The Femto Access Point FAP2 supports the TR196 standard. It has to be remarked here that an Access Point e..g. FAP2 can physically be integrated into a Router Gateway RGW2 or not. This is shown in the figure by the dashed line around both functional blocks.
   In order not to overload the Figure, only one Home Network HN1 is shown and explained in further details.
   HN1 communicates with the IOP Network via Router Gateway RGW1. Router Gateway RGW1 is coupled in the Home Network HN1 to 3 different kind of Access Points each one providing access to a respective kind of Customer Premises Equipment. Access Point AP2 is providing access via a WiFi connection to the customer premises equipment - Device 1 - DEV3 such as e.g. a tablet personal computer. This Access Point AP2 is supporting the TR98 standard. Access Point AP1 is providing access over a wireline to the customer premise equipment DEV1 and DEV2 e.g. respective a personal computer and a Television. This Access Point AP1 is supporting the TR069 protocol. The 3^{rd} access point is a Femto Access Point FAP1 which is providing access over a Radio Interface to the customer equipment DEV4 i.e. a mobile radio handset. This Femto Access Point FAP1 is supporting the TR196 standard protocol. As discussed above a Femto Access Point is providing offload for the traffic over the Radio access Network. This is here shown by means of the dashed broad arrow above the Mobile Phone DEV4. The global traffic coming from the different kinds of access points in the Home network HN1 is aggregated by the Router Gateway RGW1 and fetched towards the IP network.
   The other Home Networks, HN2 and HN3 are implemented in similar ways with at least one of the above mentioned kind of Access Points and a router gateway. - 1 Management Server MS1 such as e.g. a Femto Device Management System which is also adapted to communicated with the IP Network. The Management Server MS1 is adapted to collect monitoring data of the femto layer performance monitoring data from the femto access network e.g. from the traffic regarding HN1, HN2, HN3 and RGW2. This can for instance be realized by filtering from the traffic in the femto access the management signals or by executing measurements on the traffic in the femto access network.

It has to be explained that it is clear to a person skilled in the art that actually the term Femto Device Management System is used but that not only the management of the femto network elements is envisaged or that not only the traffic from this femto device is envisaged. With the Femto Device Management System a TR-069-based management system is meant which supports the TR-069-based family protocols such as TR-069, TR98 and TR196. This Broadband traffic includes as well the off-loaded traffic of the Radio Access Devices such as DEV4 as the traffic of the other home network devices such as DEV1,DEV2 and DEV3. As explained above, such an management system as MS2 is enabled to provide selfconfiguration, selfoptimization and serlf healing of the home network element in order to e.g. improve the customer experience.

In this Prior Art Figure 1 each of the Management Systems MS1 and MS2 in its respective Femto Layer and 3G/4G LTE Radio Access Layer are generating action signals towards its respective network elements.

The Femto Access Layer network elements are e.g. NE(FAN) : In the Home Network HN1 : RGW1, FAP1, DEV4, AP1, DEV1, DEV2, AP2, DEV3; and similar network elements in HN2 and HN3; and RGW2 with FAP2.

The Radio Access Layer Network elements are e.g. NE(RAN) : ENodeB1 and DEV4, eNodeB2, eNodeB3.

In Figure 1 it is shown that MS1 is providing action signals towards its network elements NE(FAN) and that MS2 is providing action signals towards its network elements NE(RAN).

As explained above, a problem of such independent management systems is that they do not serve a common goal.

Referring to Figure 2 an overview of an exemplary telecommunication environment in which the invention might be applied is shown.

It is referred to the description of Figure 1 for the explanation of the similar functional blocks namely :
- The Radio access Network RAN with its Radio Access Layer an its network elements eNodeB1 with DEV4, eNodeB2 and eNodeB3; and
- The Femto Access Layer with its Femto Access Layer an its network elements in the Home Network HN1 : RGW1, FAP1 with DEV4, AP1 with DEV1 and DEV2, AP2 with DEV3; and the similar network elements in Home Networks HN2 and HN3; and RGW2 with FAP2.
   It is to be noted that DEV4 belongs as well to the Radio Access Network as to the Femto Access Network.

Furthermore in Figure 2, the Management System MS12 according to the present application is shown. MS12 is coupled to the IP network and comprises a first collector COLL1, a second collector COLL2, a storage platform STO and an analytics diagnostic engine ADE. The first and second collector COLL1 and COLL2 are both coupled to an input interface of the Management System and to analytics diagnostics engine ADE and to the storage platform STO. The storage platform STO is also coupled to the analytics diagnostics engine ADE. The analytics diagnostics engine ADE is coupled to an output interface of the Management System MS12.

The first collector COLL1 is configured to collect femto layer performance monitoring data FD that comprises values for femto layer management parameters FD(f1, f2, f3, ...) of the femto access network.

The second collector COLL2 is configured to collect radio access layer performance monitoring data RD that comprises values for radio access layer management parameters RD(r1, r2, r3, ...) of the radio access network.

The analytics diagnostic engine ADE comprises decision logic for predefined normalized management parameters (n1, n2, n3, ...). Each one of the predefined normalized management parameters (n1, n2, n3, ...) is defined in relation to at least one of the femto layer management parameters e.g. f1 and at least one of the radio access layer management parameters e.g. r1. The analytics diagnostic engine ADE is configured to receive the collected femto layer performance monitoring data FD and the radio access layer performance monitoring data RD, and is further configured to process the data FD and RD in connection to each other due to the predefined normalized management parameters (n1, n2, n3, ...) and to thereby generate action signals (AS1, AS2, AS3, ...) for managing network elements NE(FAN;RAN) of both the femto access network and the radio access network. The generating of the action signals is shown for 3 actions signals AS1, AS2 and AS3 in figure 2. In this way, a first value for a first femto layer management parameter f1 and a first value for a first radio access layer management parameter r1 are both provided to a first processing block. This processing block processes the values in relation to each other by means of the predefined normalized management parameter n1 which is defined in relation to the two parameters f1 and r1. An action signal AS1 is generated and might for instance be provided towards FAP1.

Three examples of the generation of such an action signal are provided here below.

Futhermore, it has to be clear that the generated action signals (AS1, AS2, AS3, ...) are managing the network elements NE(FAN;RAN) of both the femto access network and the radio access network in relation to each other. This means that in order to serve an identical goal in both kind of networks an action signal is generated for being further processed and execution in the femto layer e.g. AS1 and in parallel an identical action signals is generated for being further process and execution in the RAN layer e.g. AS1' (see Figure 2).

In addition it has to be understood that the management system MS12 according to the present application generates action signals which comprises anyone of configuration management signals, performance management signals and fault management signals for the network elements of FAN and of RAN. This is described in some more details here below.

The management system might comprise also a storage platform STO adapted to store the collected femto layer performance monitoring data FD and the radio access layer performance monitoring data RD. In this way a detailed monitoring platform with detailed monitoring policies can be defined whereby e.g. previously collected data can be used either alone or in combination with more recent collected data. More possible design details are provided here below.

Furthermore it has to be clear that the management system MS1 2 can be a centralized system (See figure 2 - dashed lines for MS12) but might as well be designed according to a distributed way whereby e.g. the collection and storage of the data by COLL1, COLL2 and STO is performed by a physically other network element as the network element that comprises the analytics diagnostic engine ADE. This example is shown with the dotted lines for MS12 in Figure 2.

So, in addition to the conventional management of either the Femto layer or the RAN layer the actual management system is improved to provide e.g. self configuration of the Femtocells such as FAP1 with respect to RAN configuration.

Furthermore as a matter of design choice the management system might be built on a proven scalable femto device management platform for operation and maintenance functions and might be designed with a neutral technology and for instance compliant to TR 196 standards (Small Cell).

Such an integrated solution is using three distinct feature points :
i) data monitoring by means of collection and aggregation points This is shown in Figure 2 by means of COLL1 and COLL2 which might be either integrated in the management sustem MS12 or located in the network outside MS12.
ii) Management of all network elements in as well the femto layer as in the radio access layer.
iii) Automated and policy driven action points by means of generation of action signals such as AS1, AS1', AS2 and AS3. These policies might be defined according to the operator's preferences.

Different steps which can be determined during design phase of the management system and during operational phase of the management system are described now here below.
[Step 1] An operator defines the desired the policies for the collection of the performance monitoring data (FD and RD) such as e.g. the sampling interval, the parameters to be collected (f1, f2, f3, ... and r1, r2, r3, ...), the network element for which these parameters need to be collected i.e. the collection target, the collection upload interval, ...
[Step 2] An operator defines fault and alarm monitoring conditions for the management system MS12 for in the event when these conditions are matching with the collected data from the network elements the system triggers a fault notification or an alarm notifications i.e. in order to ensure generation of an dedicated action signal.
[Step 3] An operator defines target objectives (input criteria) and corrective actions (output criteria) for the collected values of the parameters. For example: checking of predefined threshold values, definition and checking of value ranges and appropriated reactions in the event of match i.e. success versus no match i.e. failure which are comprised in the generation of the action signals.
[Step 4] Monitoring of the collected data can start once the automated monitoring policies and fault detection conditions are enabled in the management system MS12.
[Step 5] The management system MS12 transmits directives to dedicated network elements such as in the Femto Access Layer FAP1, FAP2, ... and in the Radio Access Layer Network elements ENodeB1, eNodeB2, eNodeB3, ... in order to trigger when to start and stop monitoring respective collection targets (DEV1,DEV2, DEV3, DEV4, DEV5, ...) which parameters need to be collected and how frequently to collect these parameters.
[Step 6] The monitored data is sent by the source network elements such as FAP1 (via RGW1) and eNodeB1 to a specified target upload server such as COLL1 and COLL2 in order to be directly processed by the analytics diagnostics engine ADE or alternatively in order to be stored at a storage platform STO for later processing by the ADE.
   Another possible implementation is that the collected data is sent to a respective element management system such as a prior art Self Organizing Network SON MS2 and/or prior art Femto Device Management system MS1. In such a situation it is the responsibility of these prior art management systems to forward the collected data towards the first and second collector COLL1 and COLL2 fo the management system according to this application MS12.
[Step 7] Optimization algorithms are written and deployed for the data collection and aggregation points in order to better horizontal scalability and near real time responses.
[Step 8] In the event when predefined performance target objectives are met, no actions need to be taken i.e. no specific action signals are generated. In the event when the performance objectives are not met, corrective action signals are automatically generated and transmitted immediately towards the affected network elements or alternatively towards the operator in order to trigger eventual manual actions. The action signals are received at the network elements and are executed by its element manager. As a matter of example, the TR 69 protocol is used in order to ensure configuration of TR 196 Femto Access Point service object model parameters on the target Femtocell devices e.g. FAP1 and FAP2.
[Step 9] The management system MS12 monitors the health of the affected system by continuing to collect data and measuring the thresholds. In the event when the corrected actions fix the underlying problem and the system status is improving then the optimization procedure (one time session) ends.
[Step 10] In the event when the management system MS12 detects that the health of the system did not improved yet, even after executing the corrective actions, then the corrective actions are reversed by putting the system back to its previous state. This is achieved by generating action signals which are defining a rollback of functions and steps in order to get the system back to its pre corrective state.
[Step 11] In the event when the system reaches a stable state either after the corrective actions or either after a rollback action the monitoring and collection of data continues. Reports of optimization results can be produced for the operators in order to further tune the respective optimization algorithms and policies of data collection and configuration of control point.

An advantage example of energy saving which can be established by means of the present management system is described now below.

It has become increasingly important for Mobile Network Operators to continue to decrease power consumptions in telecom networks to lower their OPEX and reduce greenhouse emissions with energy saving solutions to align with corporate, industry and Environmental Protection Agency guidelines. The network elements such as FAP1/RGW1 and eNodeB1 are enabled to have standby mode with minimum power consumption along with a possibility to switch on/off the standby mode remotely from the management systems such as MS1. The energy saving operations are done carefully so as not to degrade customer quality of service and quality of experience while still saving energy.

When an eNodeB is switched off there is a need for its neighboring cells to pick up the load of the mobile handsets. Therefore switching off a mobile cell should not cause in drop of calls, handover failures, coverage holes or generate unmanageable load on its neighboring cells.

The management system according to the present application MS12 collects performance data from Femto Access Points FAP1/RGW1 and Radio access Network nodes eNodeB's to analyze the performance metrics for successful call handovers and dropped calls. When an eNodeB in the radio access network is switched off by the operator or by a scheduled energy saving policy and the nearby Femto Access Point FAP1/RGW1 has unusually high number of call drops or handover failures then the management system MS12 according to the present application coordinates with the offline eNodeB's to bring them online and resume normal operation from power saving mode. Similarly, when a Femto Access Point FAP1/RGW1 is shutdown or goes into power saving mode the Management system MS12 coordinates with the nearby eNodeB's such as e.g. eNodeB1 to revert them back into power saving mode.

Another advantage example of resolving Physical Cell Identity Conflicts of the present management system is described now below.

In order to uniquely identify each of the cells eNodeB's and Femto Access Points FAP's unique physical cell identifiers PCI's are allocated. User Equipments uniquely identify the source of a receiving signal by the PCI of the eNodeB or FAP/RGW. Typically operators use an offline PCI planning tool or manually create a deployment plan for an area where the cells are assigned unique PCIs. This planning uses Femto Access Point location and candidate neighbor cells in order to determine the PCI for each eNodeB. It is very hard and error prone in order to manually detect for PCI conflicts. In a typical market there can be 200 to 300 cell sites. Assuming that each site has 3 eNodeBs per cell site there can be close to a thousand eNodeBs in the market. Doing initial assignment of PCI and later re-assignment of PCI's when new cell sites are constructed or older one are decommissioned is a complex and error prone task for doing manually.

The management system according to the present application MS1 2 is enabled to support an operator in allocating a unique PCI for the aggregate of eNodeB's and Femto access Points FAP/RGW. The process is automated by MS12. In the event when new Femto Access Points FAP/RGW or EnodeB's are added to the global telecommunication network MS12, eventually with support of a SON coordinator, assigns unique PCIs to them based on the collected coverage area information. MS2 is also enabled to force separation between two eNodeB's which may be allocated a same PCI number. Indeed, in the event when a user equipment receives power from two eNodeB's with an identical PCI, the network element informs the serving eNodeB about the PCI conflict. So, in the event when one of the Femto Access Points has information on two neighbor eNodeB's with a same conflicting PCI then MS12 resolves the conflict by re-assigning new unique PCI's to either or both of the eNodeB's. Similarly, if two identical PCI's have been assigned to multiple Femto Access Points then MS12 resolves the PCI conflict by re-assigning unique PCI's to each or both the Femto Access Points.

Three examples which show a possible relation and action signal between the predefined normalized management parameters and the existing femto layer and radio layer management parameters are now described here below in detail.

### Example 1 : Power-interference management

In TR-196 protocol the maximum transmit power (=f1) in Figure 2 named as e.g. f1, defines the maximum possible transmit power in dBm that a Femtocell can support in the Femto Layer.

In the RAN layer - 3GPP group - a similar parameter is called CARRMaxTxPwr (= r1), in Figure 2 named as r1, that defines the maximum available transmit power within a cell in the RAN layer.

A normalized management parameter n1 is defined in relation to these two parameters f1 and r1 and reflects the power requirements for these overlaying cells. The values for f1 and r1 drive the decision logic in order to generate an output i.e. action signal AS1 and/or AS'.

The normalized management parameter n1 might be defined as follow: n1 = f1 / r1 = MaxTx Power/ CARRMaxTxPwr. This would be possible since both parameters are having the same unit (dBm).

This new parameter n1 gives an indication how much influence a femtolayer cell has on a radio layer cell or vice versa in the sense of required transmission power. This becomes more clear when considering a following example situation. In the event when e.g. DEV4 is communicating via FAP1 in the Femto layer with the Radio Network and another mobile device e.g. DEV5 (not shown) being located nearby DEV4, is communicating via eNodeB1 in the 3G/4G RAN Layer with the Radio Network, the communication of both devices might interfere with each other. For both mobile devices it is known that its radio interface contains sub-carriers which are grouped into sets of 12 consecutive sub-carriers which are corresponding to an uplink resource blocks. So, one uplink resource block is corresponding to 12 consecutive sub-carriers during one timeslot. In order to avoid interference between the physically nearby devices DEV4 and DEV5, the available bandwidth is partitioned among both devices. This can be realized by managing at FAP1 and at eNodeB1, the power for the respective subcarriers which are supporting the communication with respectively DEV4 and DEV5.

The method works as follows :
- collecting a value for f1 = MaxTx Power for network element FAP1 over the femto layer; and
- Collecting a value for r1 = CARRMaxTxPwr for network element eNodeB1 over the RAN layer; and
- Applying both values for f1 and r1 to the analytics diagnostics engine ADE which comprises decision logic for the predefined normalized management parameter n1.
- Based upon the result of the decision logic, generating the action signals AS1 and AS1'.

In this way an action signal AS1 is generated by the management server MS12 and is transmitted over the Femto Layer towards FAP1 in order to manage a respective power portion of FAP1 related to the communication with DEV4 and to enforce thereby communication with DEV4 via this respective resource block. In a similar way an action signal AS1' is generated by the management server MS12 and is transmitted over the RAN Layer towards eNodeB1 in order to manage an alternative respective power portion of eNodeB1 being related to the communication with DEV5 and to enforce thereby communication with DEV5 via an alternative resource block. Both resource blocks are distinguished from each other and interference of the two communication channels of DEV4 and DEV5 is hereby minimized.

The power on both network elements DEV4 and DEV5 is managed by the results for n1.

For example if n1>1 a stronger influence of FAP1 is expected which means more interference is expected from FAP1 to eNodeB1. On the other hand if n1<1 more interference is expected from eNodeB1 to FAP1. Thus, by evaluating n1 excessive interference can be managed i.e. reduced and / or balanced.

By applying the collected femto layer performance monitoring date f1 and the collected radio access layer performance monitoring date r1 to the analytics diagnostic engine ADE which comprises decision logic for the normalized management parameter n1, the action signals AS1 and AS1' are generated for forwarding towards respectively the network element FAP1 in the femto access network and ENodeB1 in the radio access network for management of the respective power for the resource blocks to be used whereby interference of the communication with respectively DEV4 and DEV5 is minimized i.e. an identical goal is aimed through the femto layer and through the 3G/4G radio access layer.

### Example 2 : System Description

In this example we have two parameters which are related to the High Speed Downlink Packet Access HSDPA i.e.
f2 : HSDPASupported in Femto Layer; and
r2 : hsEnable in the 3G/4G RAN layer.

Two possible values for both parameters are defined :
TRUE (1) in the event when HSDPA is supported; or
FALSE (0) in the event when HSDPA is not supported.

The normalized management parameter n2 is predefined as a correlation between f2=(1 or 0) and r2=(1 or 0).

Presume a situation that during the collecting steps values for f2 and r2 are collected for FAP1 and eNodB1, respectively and that the collected value of FAP1 for HSDPASupported is TRUE i.e. f2 = 1. Presume furthermore that in this same example situation a high number of home users in the Home Network HN1 are trying to get access with its mobile device, such as DEV4 and DEV5. Also again, the common goal is to improve the quality experience for the communication in the Home Network HN1 for e.g. the devices DEV4 and DEV5.

Based on the results for n1 (See Example 1) and n2 action signals are generated. A first action signal is generated in order to be executed by the eNodeB1 (see Example 1 above) for enforcing communication with DEV5 via a particular resource block i.e. making use of the LTE technology. A second action signal is generated and forwarded to FAP1 in order to enforce FAP1 a switching of the supported technology i.e. system enablement towards HSDPA technology (which is indeed supported by FAP1 : value for FAP1 of f2 = 1). Once the system enablement of FAP1 for HSDPA is executed at FAP1, the mobile devices which are also HSDPA enabled such as e.g. DEV4 will be able to access the Home Network HN1 via FAP1 over the Femto Layer.

Since DEV5 is communicating with eNodeB21 over a predefined resource block of LTE technology and DEV4 is communicating with FAP1 by making use of the HSDPA technology, interference of both communications is avoided. So, a common goal is reached by means of collecting values for parameters of both i.e. the Femto access network layer and the radio access network layer and by generating actions signals to be executed by network elements in as well the femto access network layer as the radio access network layer.

### Example 3 : Resources

In this example a parameter related to the system resources is described. The previous defined normalized management parameters n1 and n2 are used to acquire an indication of the available communication channel quality and the system availability. A third normalized management parameter n3 is related to the resource management. The previous normalized management parameters n1 and n2 may trigger a reconfiguration of e.g. FAP1 or eNodeB1 but previously an evaluation of the resource requirements for each network element such as e.g. FAP1 and eNodeB1 has to be evaluated. This is done via collection of values for
f3 for FAP1 i.e. its DLBandwidth parameter value; and
r3 for eNodeB1 i.e. its dl-Bandwidth parameter value.

In the event when n1 > 1 (see example above) i.e. when the communication with DEV4 is introducing interference with the communication with DEV5 (not shown) and while n2 is "true" i.e. there is potential for high data rate communication in the download direction for DEV4, it may happen that FAP1 requires a higher bandwidth in downlink whereby reconfiguration should be done for FAP1 being based on the available parameter values
i.e. the predefinition of the normalized parameter n3 is described as n3 = function (f3; n1) = function (f3 ; f1 / r1)

So n3 is predefined in function of one radio access layer management parameter r1 and two femto layer management parameters f3 and f1.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A management method for use by a management system in a telecommunication environment comprising a femto access network (FAN) and a radio access network (RAN), said method comprises the steps of
- collecting femto layer performance monitoring data (FD) comprising values for femto layer management parameters (FD(f1, f2, f3, ...)) of said femto access network; and
- collecting radio access layer performance monitoring data (RD) comprising values for radio access layer management parameters (RD(r1, r2, r3, ...)) of said radio access network, **characterized in that** said method further comprises
- predefining normalized management parameters (n1, n2, n3, ...), each one in relation to at least one of said femto layer management parameters (f1) and at least one of said radio access layer management parameters (r1); and
- predefining an analytics diagnostic engine (ADE) with decision logic for said normalized management parameters (n1, n2, n3, ...), and
- applying both said collected femto layer performance monitoring data (FD) and radio access layer performance monitoring data (RD) to said analytics diagnostic engine and thereby generating action signals (AS1, AS2, AS3, ...) for managing network elements (NE(FAN;RAN)) of both said femto access network and said radio access network.

2. The system management method according to claim 1, **characterized in that** said action signals (AS1, AS2, AS3, ...) being as such for managing said network elements (NE(FAN;RAN)) of both said femto access network and said radio access network in relation to each other.

3. The system management method according to claim 1, **characterized in that** said action signals for said network elements comprises anyone of configuration management signals, performance management signals and fault management signals.

4. The system management method according to claim 1, **characterized in that** said method comprises storing said collected femto layer performance monitoring data (FD) and radio access layer performance monitoring data (RD) at a storage platform (STO) before said step of applying.

5. The system management method according to claim 1, **characterized in that** said normalized management parameters (n1, n2, n3, ...) being anyone of a power requirement parameter, a High Speed Downlink Packet Access system description parameter or a system resource availability parameter.

6. A management system (MS12) in a telecommunication environment comprising a femto access network and a radio access network, said management system comprises
- a first collector (COLL1) adapted to collect femto layer performance monitoring data (FD) comprising values for femto layer management parameters (FD(f1, f2, f3, ...)) of said femto access network; and
- a second collector (COLL2) adapted to collect radio access layer performance monitoring data (RD) comprising values for radio access layer management parameters (RD(r1, r2, r3, ...)) of said radio access network, **characterized in that** said management system further comprises
- an analytics diagnostic engine (ADE) with decision logic for predefined normalized management parameters (n1, n2, n3, ...), each one of said predefined normalized management parameters (n1, n2, n3, ...) being in relation to at least one of said femto layer management parameters (f1) and at least one of said radio access layer management parameters (r1), said analytics diagnostic engine (ADE) being adapted to receive said collected femto layer performance monitoring data (FD) and said radio access layer performance monitoring data (RD), and being adapted to generate action signals (AS1, AS2, AS3, ...) for managing network elements (NE(FAN;RAN)) of both said femto access network and said radio access network.

7. The management system (MS12) according to claim 6, **characterized in that** said action signals (AS1, AS2, AS3, ...) being as such for managing said network elements (NE(FAN;RAN)) of both said femto access network and said radio access network in relation to each other.

8. The management system (MS12) according to claim 6, **characterized in that** said action signals for said network elements comprises anyone of configuration management signals, performance management signals and fault management signals.

9. The management system (MS12) according to claim 6, **characterized in that** said management system further comprises a storage platform (STO) adapted to store said collected femto layer performance monitoring data (FD) and radio access layer performance monitoring data (RD).

10. The management system (MS12) according to claim 6, **characterized in that** said normalized management parameters (n1, n2, n3, ...) being anyone of a power requirement parameter, a High Speed Downlink Packet Access system description parameter or a system resource availability parameter.

11. The management system (MS12) according to claim 6, **characterized in that** said first collector (COLL1), said second collector (COLL2), said analytics diagnostic engine (ADE) and said storage platform (STO) are located in a distributed way in the telecommunication network.
